(19) Europäisches Patentamt
European Patent Office
Office européen des brevets

(11) Veröffentlichungsnummer: **0 167 769**
**B1**

(12) **EUROPÄISCHE PATENTSCHRIFT**

(45) Veröffentlichungstag der Patentschrift: **06.09.89**

(51) Int. Cl.⁴: **C 09 J 3/14, C 08 F 291/00, C 08 L 33/14**

(21) Anmeldenummer: **85106424.6**

(22) Anmeldetag: **24.05.85**

(54) **Klebstoffe mit hohem Haftungsniveau auf Kunststoffen.**

(30) Priorität: **05.06.84 DE 3420924**

(43) Veröffentlichungstag der Anmeldung: **15.01.86 Patentblatt 86/3**

(45) Bekanntmachung des Hinweises auf die Patenterteilung: **06.09.89 Patentblatt 89/36**

(84) Benannte Vertragsstaaten: **BE CH DE FR GB IT LI**

(56) Entgegenhaltungen:
**EP-A- 0 093 085**
**FR-A- 2 441 650**
**US-A- 4 374 969**

**POLYM. SCI. TECHNOL. (PLENUM), 29 (Adhes. Chem.), 1984, Seiten 765-84; P.E. CRANLEY: "Isocyanatoethyl methacrylate: a latent crosslinker for coating or adhesive resins", & CHEMICAL ABSTRACTS, 103, 142672q, Nov. 85**

(73) Patentinhaber: **BAYER AG, D-5090 Leverkusen 1 Bayerwerk (DE)**

(72) Erfinder: **Fischer, Wolfgang, Dr., Breslauer Strasse 15, D-4005 Meerbusch 3 (DE)**
Erfinder: **Klein, Gerhard, Dr., Von-Flotow-Strasse 7, D-4019 Monheim (DE)**
Erfinder: **Hombach, Rudolph, Dr., Johann-Janssen-Strasse 24, D-5090 Leverkusen (DE)**
Erfinder: **Kniege, Wilfried, Dipl.-Chem., Alte Wipperfürther Strasse 80, D-5060 Bergisch Gladbach 2 (DE)**

**EP 0 167 769 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft radikalisch härtende Klebstoffe, die polymerisierbare Isocyanate enthalten und die sich durch ein hohes Haftungsvermögen auf Kunststoffen auszeichnen.

Klebstoffe, die durch einen radikalischen Polymerisationsmechanismus abbinden, sind bekannt. Im allgemeinen sind das Zweikomponentenklebstoffe, deren erste Komponente (Klebstoffkomponente) üblicherweise aus einer Lösung von Elastomeren in Monomeren mit polymerisierbarer Doppelbindung, z.B. Ester der Acryl- oder Methacrylsäure besteht, deren zweite Komponente (Härterkomponente) einen Initiator zur Auslösung der radikalischen Polymerisation enthält.

Bei den Acrylatklebstoffen der 2. Generation ($2^{nd}$ generation acrylic adhesives, SGA), deren Klebstoffkomponente aus einer Lösung von Polymeren in radikalisch polymerisierbaren Monomeren besteht, kann die Klebstoffkomponente zudem Adhäsionsverbesserer und organische Peroxide enthalten. Die zweite Komponente, die sogenannte Beschleunigungskomponente, enthält Verbindungen, die mit Polymerisationsinitiatoren reagieren.

Diese Klebstoffe sind einfach im «no-mix-Verfahren» anwendbar, da auf je eines der zu verklebenden Teile die Klebstoff- bzw. die Beschleunigungskomponente aufgetragen wird.

Weiterhin kann bei SGA-Klebstoffen die Beschleunigungskomponente ebenfalls als Harzkomponente formuliert werden. In diesem Fall werden die Aktivatoren ebenfalls mit den polymerisierbaren Monomeren und der Polymerkomponente abgemischt (z.B. EP-A 93 085). Auch diese Formulierung kann im «no-mix-Verfahren» erfolgen oder beide Komponenten können in geeigneten Mengenverhältnissen vorgemischt werden.

Als polymerisierbare Monomere werden Methylmethacrylat, (Meth-)Acrylate von Ethylenglykol, Oligoethylenglykolen, Bisphenol A, weiteren mehrwertigen Alkoholen, Polyester-, Polyether- und Polyurethan(meth-)acrylate verwendet.

Zur Verbesserung der Cohäsion und zur Verringerung des Schrumpfens während des Härtungsvorganges sowie zur Einstellung der Viskosität werden den Monomeren in der Klebstoffkomponente Polymere zugemischt, z.B. Poly(meth)acrylate, Polychloropren, chlorsulfonierte Polymere (z.B. chlorsulfoniertes Polyethylen), Nitrilkautschuke und/oder Polyurethane.

Als Initiator der radikalischen Polymerisation enthält die Klebstoffkomponente Peroxide, wie Benzoylperoxid, oder Perester wie tert. Butylperbenzoat.

Komponente 2, die Beschleunigungskomponente, enthält als aktive Spezies tertiäre aromatische Amine, z.B. Dimethylanilin oder Kondensationsprodukte aus Aminen und Aldehyden.

Die bekannten Reaktionsklebstoffe weisen eine Reihe günstiger Eigenschaften auf wie rasche Aushärtung bei Raumtemperatur, Flexibilität und auf Metallen ohne Vorbehandlung der Oberflächen und sehr gute Zugscherfestigkeit.

Durch spezielle Zusätze kann die Adhäsion zu Substraten verbessert werden, z.B. wird in der DE-OS 2 916 537 beschrieben, daß z.B. phosphorhaltige Verbindungen wie Methacryloyloxyethylphosphat zur Verbesserung der Adhäsion auf Metallen führen.

Vorzugsweise werden radikalisch abbindenden Klebstoffen polymerisierbare Carbonsäuren wie Acryl- und Methacrylsäure zur Verbesserung der adhäsiven Eigenschaften zugesetzt.

Für Kunststoffe wie Thermoplaste, z.B. Polyacetate, Polyacrylate, Polyamide und Polyimide, Polyaryle, Cellulosen, gesättigte Polyester, Polyolefine, halogenierte Polyolefine, Polystyrole und Polyvinylacetate, Duroplaste, z.B. Aminoharze, Imidharze, Epoxidharze, Phenolharze und ungesättigte Polyesterharze, eignen sich diese Klebstoffe schlechter. Auch durch Zugabe der bekannten Adhäsionsverbesserer wie Methacrylsäure wird zu Kunststoffen nur eine mangelhafte Adhäsion erzielt.

Aus der FR-A 2 441 650 sind «No-mix» Klebstoffe bekannt, die Methacrylsäure als polymerisierbare Komponente enthalten. Die Zugscherfestigkeit derartiger Klebstoffe ist jedoch für bestimmte Anwendungszwecke nicht ganz befriedigend.

Aus der US-A 4 374 969 sind Klebstoffe bekannt, die als polymerisierbare Komponente Vinylisocyanate enthalten. Jedoch enthalten diese Klebstoffe keine Acrylate. Ihre Adhäsionseigenschaften sind nicht für alle Anwendungen befriedigend.

Der mangelnden Adhäsion von Klebstoff und Substrat wird durch Vorbehandlung, z.B. mechanische Maßnahmen wie Aufrauhen durch Abschmirgeln oder Sandstrahlen, begegnet. Dies führt jedoch zur Schädigung des Materials und macht Klebeflächen aufnahmefähig zur Adsorption von Wasser und Lösemitteln. Weiterhin kann nach der DE-PS 2 340 474 für Polyester- bzw. thermoplastische Substrate ein Vorbehandlungs- bzw. Grundierungsmittel aufgetragen werden, sodaß dadurch bessere Ergebnisse erreicht werden. Diese Grundierungsmittel bestehen aus speziellen Urethanaddukten.

Zur Erhöhung der Adhäsion von Kunststoffoberflächen ist es ebenfalls gebräuchlich, diese einer elektrischen Entladung, wie Corona- oder Plasmabehandlung, auszusetzen.

Sowohl mechanische Vorbehandlung, Verwendung von Grundierungsmitteln als auch die Behandlung von zu verklebenden Oberflächen mittels elektrischer Entladung sind aufwendige Verfahren.

Es wurde nun gefunden, daß durch Zusatz von radikalisch polymerisierbaren Isocyanaten zu Acrylatklebstoffen, deren Haftung auf Kunststoffen verbessert wird, ohne daß eine Vorbehandlung der Kunststoffe notwendig ist.

Gegenstand der Erfindung sind daher Zweikomponentenklebstoffe aus

a) 5–70 Gew.-Teilen Polyacrylate, Polymethacrylate, Polychloropren, chloriertes Polyethylen, chlorsulfonierte Polymere wie chlorsulfoniertes Polyethylen oder Polychloropren, Acrylnitril-Butadienkautschuke, Styrol-Butadienkautschuke und Ethylenvinylacetatpolymere,

b) 20–80 Gew.-Teilen Reaktivverdünner mit einer polymerisierbaren Gruppe,

c) 1–10 Gew.-Teilen Reaktivverdünner mit mehreren polymerisierbaren Gruppen wie Oligo-(meth)-acrylate, basierend auf Diolen und Triolen,

d) 5–50 Gew.-Teilen polymerisierbares Isocyanat der Formel (I)

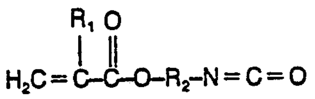

(I),

wobei

$R_1$ Wasserstoff oder Alkyl mit 1 bis 5 C-Atomen und

$R_2$ ein gegebenenfalls verzweigtes Alkylen mit 1 bis 10 C-Atomen

bedeuten,

e) 1–10 Gew.-Teilen Peroxide wie Benzolperoxid, tert.-Butylperoxid, Perester, Hydroperoxide, oder Azobisisobuttersäuredinitril bezogen auf die Summe der Massen a) bis d)

als Komponente 1 und

als Komponente 2 als Aktivatorverbindungen tertiäre aromatische Amine wie N,N-Dimethylanilin oder Kondensationsprodukte aus Aldehyden und primären oder sekundären Aminen und gegebenenfalls weiteren Zusatzstoffen.

Vorzugsweise enthält Komponente 1) 20–60 Gew.-Teile Polymer, b) 30–70 Gew.-Teile Reaktivverdünner mit einer polymerisierbaren Gruppe, c) 2–10 Gew.-Teile Reaktivverdünner mit mehreren polymerisierbaren Gruppen, d) 5–20 Gew.-Teile polymerisierbares Isocyanat und d) 2–7 Gew.-% peroxidische Verbindung, bezogen auf die Summe der Massen a bis d.

Der Klebstoffkomponente 1 enthält erfindungsgemäß als Polymere a) z.B. Polyacrylate, Polymethacrylate, Polychloropren, chloriertes Polyethylen, clorsulfonierte Polymere, z.B. chlorsulfoniertes Polyethylen oder Polychloropren, Acrylnitril-Butadienkautschuke, Styrol-Butadienkautschuke und Ethylenvinylacetatpolymere.

Reaktivverdünner b) können Spezies mit einer polymerisierbaren Gruppe, einfach ungesättigte Verbindungen, die nach einem freien Radikalmechanismus polymerisierbar sind, z.B. Ester der (Meth-)Acrylsäure, die gegebenenfalls funktionelle Gruppen tragen, die mit freiem Isocyanat nicht reagieren, Styrol sowie Mono- und Polyalkylstyrole, halogenierte Monomere wie Chlorstyrol und Vinylidenchlorid, sein,

Verbindungen mit mehreren polymerisierbaren Gruppen c) können vernetzende Monomere wie Oligo(meth-)acrylate basierend auf Diolen und Triolen sein, vorzugsweise ethoxylierte Trismethylolpropantris(meth)acrylate,

polymerisierbare Isocyanate d) können der Formel (I) entsprechen und

peroxidische Verbindungen e) können z.B. organische Peroxide wie Benzoylperoxid, tert.-Butylperoxid, Perester, Hydroperoxide und Azobisisobuttersäuredinitril (AIBN) sein.

Als Aktivatorverbindungen der Komponente 2, die den Zerfall der freie Radikale liefernden Verbindungen in Radikale bei Raumtemperatur katalysieren, können z.B. tertiäre aromatische Amine, wie N,N-Dimethylanilin oder Kondensationsprodukte aus Aldehyden und primären oder sekundären Aminen, z.B. der Beschleuniger Vulazit 576® (BAYER AG) (Kondensationsprodukt aus Anilin und Butyraldehyd) verwendet werden. Gegebenenfalls kann Komponente 2 auch Zusatzstoffe wie Lösungsmittel und Filmbildner enthalten.

Geeignete Isocyanate haben die Formel (I)

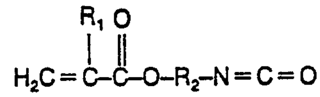

(I),

wobei

$R_1$ Wasserstoff oder Alkyl mit 1 bis 5 C-Atomen und

$R_2$ ein gegebenenfalls verzweigtes Alkylen mit 1 bis 10 C-Atomen

bedeuten.

Die polymerisierbaren isocyanathaltigen Adhäsionsverbesserer d) der Komponente 1 haben vorzugsweise Molekulargewichte bis zu 1000, besonders bevorzugt Molekulargewichte bis zu 500.

Weiterhin können den Klebstoffen gegebenenfalls weitere Zusatzstoffe, z.B. übliche Komponenten wie Füllstoffe wie Oxide, Pigmente, Farbstoffe, paraffinische Substanzen und Netzmittel, Stabilisatoren wie kleine Mengen an aktivem Sauerstoff, aktiven Sauerstoff enthaltende Verbindungen, Hydrochinone, weitere Verbindungen von Übergangsmetallen oder Komplexe von Acetylaceton mit Fe, Cu, Co, U, zugemischt werden.

Die erfindungsgemäßen Klebstoffe werden als 2-Komponenten-Systeme verwendet. Zur Formulierung werden alle angegebenen Aktivatoren bzw. Promotoren der radikalischen Polymerisation, gegebenenfalls mit Lösungsmittel als die eine (Aktivatorkomponente) und alle polymerisierbaren und polymeren Bestandteile mit einer freie Radikale liefernden Verbindung sowie sämtlichen nicht aktivierenden Zusatzstoffen und Stabilisatoren als die andere (Klebstoffkomponente) gemischt.

Die Anwendung erfindungsgemäßer 2-Komponenten-Klebstoffe erfolgt auf übliche Weise nach der «no-mix-Methode».

Prinzipiell können beide Komponenten auch vorgemischt werden im Gewichtsverhältnis Komponente 1 zu Komponente 2 von 99,9 zu 0,1 bis 90,0 zu 10,0. Bevorzugt ist ein Bereich von 95,0 zu 5,0 bis 98,0 zu 2,0. Diese Mengenangabe bezüglich Komponente 2 bezieht sich auf reinen Wirkstoff.

Die erfindungsgemäßen Klebstoffe sind z.B. zum Verkleben von glasfaserverstärkten Polyesterharzen (GF-UP, sheet moulded compounds in low profile-Qualität), polaren, schwer löslichen Polymeren wie Polyamiden, die gängigerweise ohne Vorbehandlung nicht verklebbar sind, geeignet.

Beispiele

Beispiel 1

Komponente 1 A (Klebstoffkomponente)

39 g chlorsulfoniertes Polyethylen (Hypalon 20®, DuPont)
56 g Methylmethacrylat
3 tetraoxethyliertes Trimethylolpropan-triacrylat
2 tert. Butylperbenzoat
0,8 g Saccharin
10 g Isocyanatoethylmethacrylat (Dow-Chemical)

Diese Bestandteile der Klebstoffkomponente wurden in einer Laborknetapparatur mit sigma-Knethaken zu einer homogenen Masse gemischt.

Komponente 1 B (Vergleichsklebstoffkomponente)

Entsprechend der Komponente 1 A wurde zum Vergleich eine Klebstoffkomponente formuliert, die bei ansonsten identischer Zusammensetzung, statt 10 g Isocyanatoethylmethacrylat 10 g Methacrylsäure enthält.

Komponente 2 (Aktivatorkomponente)

Anilin-Butyraldehyd-Kondensationsprodukt (Vulkazit 576®), Bayer AG)

Komponente 1 und Komponente 2 wurden auf je einen der zu verklebenden Prüfkörper aufgetragen. Danach wurden die Prüfkörper aufeinandergelegt und 2 Stunden mit einem Gewicht von 1 kg beschwert. Nach 2 Stunden wurden die Gewichte entfernt und die verklebten Prüfkörper ca. 24 h bei Raumtemperatur belassen. Danach erfolgte die Prüfung der Zugscherfestigkeit nach DIN 53 283.

Als Prüfkörper wurden Streifen mit den Abmessungen 20 × 40 × 4 mm verwendet. Die überlappte Fläche betrug 20 × 10 mm.

| Prüfmaterial | Zugscherfestigkeiten/N/$mm^2$ Komponente 1A | Komponente 1B (Vergl.) |
|---|---|---|
| Leguval (GF-UP)® | 7,8 | 2,5 |
| Durethan (PA 6)® | 7,9 | 5,4 |
| Makrolon (PC)® | 7,9 | 6,3 |

Beispiel 2

Komponente 1 (Klebstoffkomponente)

39 g chlorsulfoniertes Polyethylen (Hypalon 20®, DuPont)
56 g Methylmethacrylat
3 g tetraoxethyliertes Trimethylolpropan-triacrylat
2 g tert. Butylperbenzoat
0,8 g Saccharin

alternativ:

A 10 g Isocyanatoethylmethacrylat (Dow Chemical)
B 10 g 4-Isocyanato-3-methyl-but-2-yl-acrylat
C 10 g Umsetzungsprodukt aus: 1 Mol Hydroxyethylmethacrylat und 1 Mol Desmodur N (Triisocyanat)
D (Vergleich) 10 g Methacrylsäure

Komponente 2 (Beschleunigerkomponente)

Anilin-butyraldehyd-Kondensationsprodukt (Vulkazit 576®, Bayer AG).

Bei der Verklebung wurde gemäß Beispiel 1 verfahren. Als Festkörper dienten die beschriebenen glasfaserverstärkten UP-Harz (Leguval) ®-Streifen.

| | Zugscherfestigkeiten auf GF-UP/N/$mm^2$ |
|---|---|
| Komponente 1 A | 7,8 |
| Komponente 1 B | 7,0 |
| Komponente 1 C | 4,2 |
| Komponente 1 D (Vgl.) | 2,5 |

Beispiel 3

Komponente 1 (Klebstoffkomponente)

30 g chlorsulfoniertes Polychloropren (1% S, 41% Cl)
67 g Methylmethacrylat
3 g tetraoxethyliertes Trimethylolpropan-triacrylat
4 g Lucidol CH-50® (Akzo Chemie) /Dibenzoylperoxid in 50% Phlegmatisierungsmittel)

alternativ:

A 10 g Isocyanatoethylmethacrylat (Dow-Chemical)
B 10 g 4-Isocyanato-3-methyl-but-2-yl-acrylat
C (Vergleich) 10 g Methacrylsäure

Komponente 2 (Aktivatorkomponente)

3 g N,N-Dimethylanilin
1 g N,N-Bishydoxyethyl-p-toluidin

Bei der Verklebung wurde gemäß Beispiel 1 verfahren. Als Testkörper dienten die beschriebenen glasfaserverstärkten UP-Harz(Leguval) ®-Streifen.

| | Zugscherfestigkeiten auf GF-UP/N/$mm^2$ |
|---|---|
| Komponente 1 A | 5,9 |
| Komponente 1 B | 5,1 |
| Komponente 1 C (Vergleich) | 3,2 |

Beispiel 4

Komponente 1 (Klebstoffkomponente)
40 g Ethylen-vinylacetat-Kautschuk (40% Vinylacetat) (Levapren®, Bayer AG)
60 g Methylmethacrylat
3 g tetraoxethyliertes Trimethylolpropan-triacrylat
4 g Lucidol CH-50® (Akzo Chemie) (Dibenzoylperoxid in 50% Phlegmatisierungsmittel)

alternativ:
A 10 g Isocyanatoethylmethacrylat (Dow-Chemical)
B 10 g 4-Isocyanato-3-methyl-but-2-yl-acrylat
C (Vergleich) 10 g Methacrylsäure

Komponente 2 (Aktivatorkomponente)
3 g N,N-Dimethylanilin
1 g N,N-Bishydroxyethyl-p-toluidin

Bei der Verklebung wurde gemäß Beispiel 1 verfahren. Als Testkörper dienten die beschriebenen glasfaserverstärkten UP-Harz(Leguval)®-Streifen.

| | Zugscherfestigkeiten auf GF-UP/N/mm² |
|---|---|
| Komponente 1 A | 4,5 |
| Komponente 1 B | 4,0 |
| Komponente 1 C (Vergleich) | 1,7 |

**Patentansprüche**

1. Zweikomponentenklebstoffe aus

a) 5–70 Gew.-Teilen Polyacrylate, Polymethacrylate, Polychloropren, chloriertes Polyethylen, chlorsulfonierte Polymere wie chlorsulfoniertes Polyethylen oder Polychloropren, Acrylnitril-Butadienkautschuke, Styrol-Butadienkautschuke und Ethylenvinylacetatpolymere,

b) 20–80 Gew.-Teilen Reaktivverdünner mit einer polymerisierbaren Gruppe,

c) 1–10 Gew.-Teilen Reaktivverdünner mit mehreren polymerisierbaren Gruppen wie Oligo(meth)-acrylate, basierend auf Diolen und Triolen,

d) 5–50 Gew.-Teilen polymerisierbares Isocyanat der Formel (I)

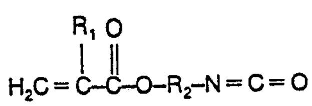

wobei

$R_1$ Wasserstoff oder Alkyl mit 1 bis 5 C-Atomen und

$R_2$ ein gegebenenfalls verzweigtes Alkylen mit 1 bis 10 C-Atomen

bedeuten,

e) 1–10 Gew.-Teilen Peroxide wie Benzolperoxid, tert.-Butylperoxid, Perester, Hydroperoxide, oder Azobisisobuttersäuredinitril,

bezogen auf die Summe der Massen a) bis d)

als Komponente 1 und als Komponente 2 als Aktivatorverbindungen tertiäre aromatische Amine wie N,N-Dimethylanilin oder Kondensationsprodukte aus Aldehyden und primären oder sekundären Aminen und gegebenenfalls weiteren Zusatzstoffen.

2. Radikalisch härtender Klebstoff nach Anspruch 1, dadurch gekennzeichnet, daß das polymerisierbare Isocyanat ein Molekulargewicht von bis zu 500 hat.

**Claims**

1. Two-component adhesives of

a) 5 to 70 parts by weight polyacrylates, polymethacrylates, polychloroprene, chlorinated polyethylene, chlorosulfonated polymers, such as chlorosulfonated polyethylene or polychloroprene, acrylonitrile-butadiene rubbers, styrenebutadiene rubbers and ethylene/vinyl acetate polymers,

b) 20 to 80 parts by weight reactive diluent containing a polymerizable group,

c) 1 to 10 parts by weight reactive diluent containing several polymerizable groups, such as oligo(meth)-acrylates based on diols and triols,

d) 5 to 50 parts by weight polymerizable isocyanate corresponding to formula (I)

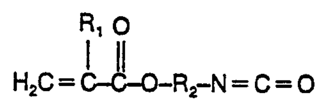

in which

$R_1$ is hydrogen or $C_1$–$C_5$ alkyl and

$R_2$ is an optionally branched $C_1$–$C_{10}$ alkylene radical,

e) 1 to 10 parts by weight peroxides, such as benzene peroxide, tert.-butyl peroxide, peresters, hydroperoxides or azo-bis-isobutyrodinitrile, based on the sum of the weights of a) to d) as component 1 and tertiary aromatic amines, such as N,N-dimethyl aniline, or condensates of aldehydes and primary or secondary amines as activators compounds and, optionally, further additives as component 2.

2. A radically curing adhesive as claimed in claim 1, characterized in that the polymerizable isocyanate has a molecular weight of up to 500.

**Revendications**

1. Adhésifs à deux composants, constitués de

a) 5 à 70 parties en poids de polyacrylates, polyméthacrylates, polychloroprène, polyéthylène chloré, polymères chlorosulfonés tels que polyéthylène ou polychloroprène chlorosulfoné, caoutchoucs acrylonitrile-butadiène, caoutchouchs styrène-butadiène et polymères éthylène-acétate de vinyle,

b) 20 à 80 parties en poids de diluants réactifs portant un groupe polymérisable,

c) 1 à 10 parties en poids de diluants réactifs portant plusieurs groupes polymérisables tels que des oligo(méth)acrylates, à base de diols et de triols,

d) 5 à 50 parties en poids d'isocyanate polymérisable de formule (I)

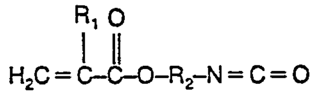

dans laquelle

$R_1$ représente l'hydrogène ou un groupe alkyle ayant 1 à 5 atomes de carbone et

$R_2$ est un groupe alkylène éventuellement ramifié ayant 1 à 10 atomes de carbone,

e) 1 à 10 parties en poids de peroxydes tels que peroxyde de benzoyle, peroxyde de tertiobutyle, de peresters, d'hydroperoxydes ou d'azo-bis-isobutyronitrile,

par rapport à la somme des masses de a) à d) comme composant 1 et

comme composant 2, en tant que composés activateurs, des amines aromatiques tertiaires telles que la N,N-diméthyl-aniline ou des produits de condensation d'aldéhydes et d'amines primaires ou secondaires et le cas échéant d'autres additifs.

2. Adhésif à durcissement radicalaire suivant la revendication 1, caractérisé en ce que l'isocyanate polymérisable a un poids moléculaire allant jusqu'à 500.